(19) Europäisches Patentamt
European Patent Office
Office européen des brevets

(11) **EP 1 179 964 A2**

(12) **DEMANDE DE BREVET EUROPEEN**

(43) Date de publication:
**13.02.2002 Bulletin 2002/07**

(51) Int Cl.[7]: **H04Q 11/00**

(21) Numéro de dépôt: **01402116.6**

(22) Date de dépôt: **06.08.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **10.08.2000 FR 0010529**

(71) Demandeur: **ALCATEL**
**75008 Paris (FR)**

(72) Inventeurs:
• **Zami, Thierry**
**91300 Massy (FR)**

• **Le Sauze, Nicolas**
**91440 Bures-sur-Yvette (FR)**
• **Penninckx, Denis**
**91620 Nozay (FR)**
• **Chiaroni, Dominique**
**92160 Antony (FR)**
• **Jourdan, Amaury**
**92310 Sevres (FR)**
• **Rofidal, Olivia**
**91440 Bure sur Yvette (FR)**

(74) Mandataire: **Sciaux, Edmond et al**
**COMPAGNIE FINANCIERE ALCATEL Dépt. Propr. Industrielle, 30, avenue Kléber**
**75116 Paris (FR)**

(54) **Commutateur de signaux optiques**

(57) L'invention est relative à un commutateur (112) de signaux optiques qui comporte un nombre de sorties au moins égal au nombre d'entrées et qui comprend des moyens pour qu'un signal d'entrée soit acheminé sur au moins une de ces sorties. Chaque entrée reçoit des informations modulant des porteuses optiques de longueurs d'onde différentes. Le commutateur (112) comporte des moyens ($126_{11}$, $126_{12}$, ..., $126_{NB}$) pour grouper l'ensemble des porteuses reçues en sous-ensembles disjoints de porteuses ($G_{11}$, ..., $G_{1B}$, ..., $G_{N1}$, ..., $G_{NB}$), et des moyens pour sélectionner ($129_1$, $129_2$, ..., $129_{NB}$) en bloc les porteuses d'un même sous-ensemble de porteuses. Les informations correspondant à chaque sous-ensemble de porteuses optiques sont ainsi acheminées en bloc vers une même sortie de sous-ensemble.

En commutant les porteuses par sous-ensembles, on obtient une meilleure qualité de signal en sortie tout en limitant le nombre de composants pour une même quantité totale d'information commutée.

FIG. 2

**Description**

L'invention concerne un commutateur de signaux optiques, et plus particulièrement un commutateur pour des signaux de type paquet.

Les télécommunications connaissent un développement important. De plus en plus d'utilisateurs (particuliers et entreprises) transmettent un nombre croissant de messages dans les réseaux de télécommunication. En outre, ces messages comportent une quantité de plus en plus élevée d'informations, par exemple lors de l'envoi d'images. Pour répondre à cette demande grandissante en débit d'informations, les opérateurs des réseaux de télécommunication utilisent la transmission optique des signaux. Cette transmission utilise la modulation, suivant l'information à transmettre, de signaux optiques, en général produits par des lasers, puis la propagation de ces signaux modulés dans un réseau à conducteurs ou fibres optiques.

La transmission optique des signaux comporte plusieurs avantages. En particulier, les atténuations du signal lors de la transmission sont moindres que dans le cas de signaux électriques et la bande passante des fibres optiques est plus large. Il est ainsi possible de faire transiter simultanément plusieurs porteuses de longueurs d'onde distinctes dans une même fibre. Cette dernière technique, dite du multiplexage en longueur d'onde, permet d'atteindre des débits d'information de l'ordre du Térabits/s.

Parallèlement au multiplexage en longueur d'onde, le multiplexage temporel permet la transmission simultanée de plusieurs communications sur une même porteuse. Ainsi dans le mode paquet, chaque porteuse transmet des paquets relatifs à divers messages dont les informations ont été découpées en paquets, chaque paquet étant envoyé dans le réseau en le munissant d'une en-tête indiquant sa destination. Lorsque le paquet traverse un dispositif de commutation, celui-ci consacre des ressources à l'acheminement de ce paquet, durant l'intervalle de temps nécessaire à la commutation du paquet vers une sortie demandée. Ensuite ces ressources deviennent libres pour la commutation d'un autre paquet. Puisque les paquets ont une durée temporelle limitée, de l'ordre de la microseconde, de nombreuses communications peuvent être transmises en un court intervalle de temps. Cette politique de routage est actuellement utilisée par le plus important des réseaux : Internet.

On envisage de réaliser des commutateurs en technologie optique. On distingue deux types de commutateurs :

- des brasseurs qui établissement des connexions semi-permanentes entre des artères acheminant un grand nombre de communications ou de messages multiplexes ;
- et des commutateurs capables d'acheminer individuellement les communications, ou les messages, c'est à dire reconfigurables pour chaque nouvelle communication ou pour chaque nouveau message.

Le document JINNO M ET AL : « ULTRA-WIDE-BAND WDM NETWORKS AND SUPPORTING TECHNOLOGIES » CORE NETWORKS AND NETWORK MANAGEMENT, AMSTERDAM : IOS PRESS, NL, 1999, pages 90-97, XP000829416 ISBN / 90-5199-497-4 décrit un brasseur qui reçoit et qui commute, sans les démultiplexer, des signaux optiques constitués de seize porteuses ayant des longueurs d'ondes distinctes. Ce commutateur ne peut pas réaliser l'acheminement individuel de communications ou de message. D'autre part, il est conçu pour des vitesses de commutation très basses.

L'invention concerne les commutateurs qui ont pour fonction d'acheminer individuellement des communications ou des messages. De plus, lorsque les signaux sont transmis en mode paquet, le commutateur doit acheminer tous les paquets présents aux entrées respectives vers des sorties désignées, puis changer de configuration pour acheminer les paquets suivants.

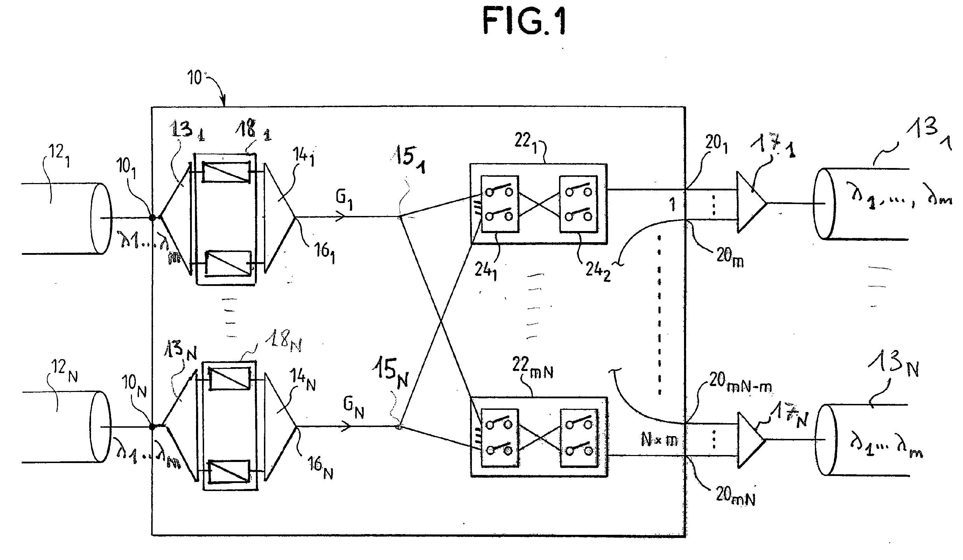

La **figure 1** représente le schéma synoptique d'un commutateur connu 10 qui réalise cette fonction. Il comprend N entrées $10_1$, $10_2$, ... $10_N$ dont chacune est destinée à être connectée à une fibre optique, respectivement $12_1$, $12_2$,..., $12_N$. Chacune de ces fibres transmet m canaux constitués respectivement de m porteuses de longueurs d'onde distinctes $\lambda_1$, $\lambda_2$..., $\lambda_m$, modulées par impulsions et par paquets.

Chaque entrée, respectivement $10_1$, $10_2$, ... $10_N$, est reliée à un démultiplexeur optique correspondant $13_1$,...,$13_N$ qui permet de séparer les m porteuses reçues sur cette entrée. Ensuite chaque porteuse est transmise à un dispositif de régénération et de conversion de longueur d'onde, $18_1$,..., $18_N$. Les signaux ainsi convertis sont recombinés à l'aide d'un multiplexeur optique $14_1$,...,$14_N$. A la sortie de ces multiplexeurs, on obtient N signaux $G_1$, $G_2$, ..., $G_N$. Ces N signaux sont alors diffusés chacun vers m.N directions, respectivement par des coupleurs $15_1$, ..., $15_N$. Ils sont ensuite acheminés vers m x N sorties du commutateur 10, respectivement $20_1$, $20_2$, ..., $20_{mN}$, par m x N organes de sélection, respectivement $22_1$, $22_2$, ..., $22_{mN}$. Chaque organe de sélection comporte deux parties, à savoir, par exemple pour l'organe $22_1$, un premier dispositif $24_1$ de sélection d'entrée et un second dispositif $24_2$ de sélection de longueur d'onde.

Par exemple, le dispositif de sélection d'entrée $24_1$ comporte N entrées dont chacune est reliée aux sorties respectives, $16_1$ à $16_N$, des dispositifs de régénération et de conversion $14_1$, $14_2$... $14_N$. Ce dispositif de sélection d'entrée $24_1$ sélectionne au plus l'un des signaux parmi les N signaux reçus $G_1$, $G_2$, ..., $G_N$. Ensuite, le signal sélectionné est acheminé vers le dispositif $24_2$ de sélection de longueur d'onde. Ce dernier choisit, parmi les m porteuses du signal sélectionné, une seule des porteuses, pour la transmettre sur une sortie $20_1$ du

commutateur 10. Ensuite, les signaux fournis par les sorties $20_1$, $20_2$, ..., $20_{mN}$ sont regroupées, par groupe de m signaux ayant des longueurs d'onde distinctes, $\lambda_1$, $\lambda_2$,..., $\lambda_m$, par des multiplexeurs $14_1$, ..., $14_N$, pour être transmis par des fibres optiques $13_1$,..., $13_N$.

Dans d'autres modes de réalisation, le nombre de fibres de sortie et le nombre de canaux par fibre de sortie peuvent être différents de N et m respectivement. Par contre, le nombre total m.N de canaux en sortie est égal au nombre total de canaux en entrée.

Chaque dispositif de sélection d'entrée, $24_1$..., comprend au moins N éléments de sélection, par exemple des amplificateurs optiques utilisés comme portes optiques. Chaque dispositif de sélection de longueur d'onde, $24_2$...., comporte au moins m éléments de sélection, constitués par exemple d'amplificateurs optiques utilisés comme portes optiques, et de moyens sélectifs en longueur d'onde. Ce commutateur 10 comprend donc, au minimum, m.N.(m+N) amplificateurs optiques. Ce grand nombre de composants n'est favorable ni à la fiabilité, ni à la simplicité, ni à l'optimisation du coût de fabrication. En outre, chaque signal $G_1$, $G_2$, ..., $G_N$ est diffusé vers une entrée de chacun des m.N organes de sélection d'entrée $22_1$, $22_2$, ..., $22_{mN}$. Cette diffusion a pour conséquence une division de la puissance de chaque signal $G_i$ par un facteur m.N.

En outre, après la sélection effectuée par le premier dispositif $24_1$, la sélection opérée par le second dispositif $24_2$ va diviser encore la puissance du signal par un facteur égal au maximum à une valeur comprise entre N et m. Ainsi, au total la puissance de chaque signal d'entrée est affaiblie au minimum d'un facteur N.m. max(N,m). Cette diminution de la puissance des signaux dans les dispositifs de sélection entraîne un faible rapport signal à bruit, et donc des distorsions qui deviennent gênantes pour les signaux à très haut débit, par exemple supérieur à 10 Gbits/s.

L'invention a pour but de réduire significativement le nombre de divisions de chaque signal, pour un même débit total traité, dans un tel commutateur. On augmente ainsi le rapport signal à bruit et, de ce fait, on peut atteindre des débits d'information supérieurs.

L'objet de l'invention est un commutateur de signaux optiques comportant un nombre de sorties au moins égal au nombre N d'entrées, pour acheminer un signal d'entrée vers au moins une sortie, chaque entrée étant destinée à recevoir des signaux modulant des porteuses optiques ayant m longueurs d'onde différentes ;

**caractérisé** en ce qu'il comporte :

- des moyens pour grouper l'ensemble des porteuses reçues sur une entrée du commutateur en sous-ensembles disjoints de porteuses ;
- des organes de sélection pour acheminer en bloc les signaux correspondant à chaque sous-ensemble de porteuses optiques ;
- et des moyens pour décomposer chaque sous-ensemble, puis transmettre toutes les porteuses de ce sous-ensemble vers une même sortie du commutateur.

Le commutateur ainsi caractérisé traite simultanément tout un sous-ensemble de l'ensemble de longueurs d'onde, c'est à dire plusieurs longueurs d'onde à la fois, ce qui permet d'utiliser un seul et même composant au lieu d'un composant par longueur d'onde, pour chaque fonction telle que l'amplification et la commutation, et ce jusqu'à la sortie de destination. De ce fait, les signaux sont divisés dans une moins grande mesure que dans le commutateur optique classique représenté sur la figure 1.

Dans le commutateur connu, le facteur de division de la puissance de chaque porteuse est mxN avant le dispositif $24_1$ de sélection d'entrée. Entre le dispositif $24_1$ de sélection d'entrée et un second dispositif $24_2$ de sélection de longueur d'onde, le division est le maximum de m et N. Nous verrons dans les exemples de réalisations que dans le commutateur selon l'invention nous la division est ramenée à NxB avant l'étage de sélections d'entrée, et à B entre l'étage de sélection d'entrée et l'étage de sélection du sous-ensemble de longueur d'onde, B étant le nombre total de sous-ensembles de porteuses, par fibre optique. Par exemple, si l'ensemble des porteuses comprend 16 porteuses (m = 16), et si chaque sous-ensemble comporte quatre porteuses (B=4) le facteur de division de chaque signal sera $\frac{m.Max(N,m)}{B^2} = \frac{16 \times 4}{4 \times 4} = 4$ fois moins important que dans le commutateur connu représenté sur la figure 1.

Selon un mode de réalisation particulier, le commutateur selon l'invention est caractérisé en ce qu'il comporte en outre :

- des moyens pour grouper l'ensemble des sous-ensembles de porteuses, en groupes disjoints de sous-ensembles ;
- des moyens pour acheminer en bloc les informations correspondant à une pluralité de sous-ensembles de porteuses ;
- et des moyens pour sélectionner un seul sous-ensemble de porteuses par sortie du commutateur.

Le commutateur ainsi caractérisé traite plusieurs sous-ensembles de porteuses à la fois, ce qui permet d'utiliser un seul et même composant au lieu d'un composant par sous-ensemble, pour chaque fonction telle que l'amplification et la commutation.

D'autres caractéristiques et avantages de l'invention apparaîtront avec la description de certains de ses modes de réalisation, celle-ci étant effectuée en se référant aux dessins ci-annexés sur lesquels :

La figure 1, déjà décrite, représente le schéma synoptique d'un commutateur optique connu.

La figure 2 représente le schéma d'un premier mode de réalisation du commutateur optique selon l'invention, utilisant des sous-ensembles de porteuses.

La figure 3 représente le schéma d'un deuxième mode de réalisation du commutateur optique selon l'invention, utilisant des groupes de sous-ensembles de porteuses.

Les figures 4, 5, 10, 11, 12, 13 représentent les schémas synoptiques de différents modes de réalisation des moyens de commutation utilisables dans ce second mode réalisation.

Les figures 6 à 9 représentent les schémas synoptiques de différentes variantes pour une partie du mode de réalisation représenté sur la figure 5.

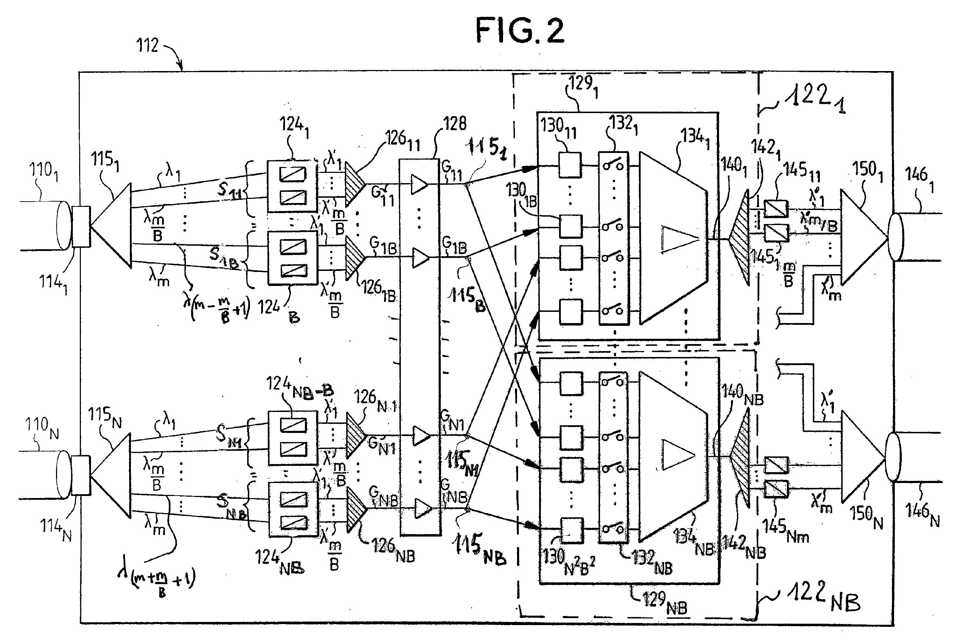

La **figure 2** représente le schéma synoptique d'un premier mode de réalisation 112 du commutateur selon l'invention. Il comprend N entrées connectées chacune à une fibre optique, $110_1$, $110_2$, ..., $110_N$, transmettant des signaux multiplexés en longueurs d'onde. Chaque fibre optique transporte m porteuses, de longueurs d'onde différentes $\lambda_1$, $\lambda_2$,..., $\lambda_m$. Chaque porteuse transporte une suite de messages, chaque message ayant une destination distincte. Le commutateur doit donc être configuré différemment pour chaque message. Pour regrouper des porteuses dans un même sous-ensemble de porteuses, deux techniques sont possibles :

- soit regrouper différents messages ayant une même destination ;
- soit regrouper des segments de message découpés dans un même message.

Il est possible aussi de combiner ces deux techniques. Plus précisément, la seconde technique consiste à découper chaque message en plusieurs parties, chacune de celles-ci étant transmise par une porteuse de longueur d'onde distincte de celles des autres porteuses transmettant les autres parties du message. Ces porteuses étant transmises simultanément vers une même destination, elles forment, dans chaque fibre optique, un sous-ensemble de porteuses devant être acheminées vers la même sortie.

Dans le mode de réalisation représenté sur la figure 2, toutes les fibres optiques transmettent un nombre identique m de porteuses, et le découpage des messages a déjà été fait en amont du commutateur, c'est à dire dans le réseau. Une variante de réalisation consisterait à placer en entrée du commutateur un démultiplexeur temporel pour répartir un message de débit D sur f porteuses ayant des longueurs d'onde distinctes et un débit D/f chacune ; et à placer en sortie du commutateur un multiplexeur temporel pour reconstituer le message sur une seule porteuse de débit D.

Par exemple, pour les m porteuses arrivant par la fibre $110_1$, le commutateur 112 utilise B sous-ensembles de porteuses $S_{11}$, ...., $S_{1B}$. Pour les m porteuses arrivant par la fibre $110_N$, le commutateur 112 utilise B sous-ensembles de porteuses $S_{N1}$, ...., $S_{NB}$. Dans cet exemple, tous les sous-ensembles comprennent m/B signaux ayant respectivement m/B longueurs d'onde distinctes $\lambda_1$, $\lambda_2$,..., $\lambda_{m/B}$.

Chaque entrée du commutateur 112 est reliée à un dispositif de synchronisation, respectivement $114_1$, $114_2$ ..., $114_N$, dont le rôle est de synchroniser à une horloge (non montrée) du commutateur l'ensemble des paquets transportés par les porteuses arrivant sur cette entrée, afin que l'ensemble du commutateur fonctionne de façon synchrone. La sortie de chaque dispositif de synchronisation $114_1$, $114_2$, ..., $114_N$ est reliée à l'entrée d'un démultiplexeur optique correspondant $115_1$, $115_2$, ..., $115_N$, par exemple à filtre interférentiel, qui permet de séparer les m porteuses reçues à chaque entrée, en les restituant respectivement sur m sorties. Ces m porteuses sont groupées ensuite en B sous-ensembles $S1_1$, ..., $SN_B$ constitués chacun de m/B porteuses.

Chaque sous-ensemble de porteuses, $S1_1$, ..., $SN_B$, est transmis à un dispositif de régénération et de conversion de longueur d'onde, respectivement $124_1$ ..., $124_{NB}$. Chaque dispositif de régénération et de conversion comporte, pour chacune des m/B porteuses qu'il reçoit, un régénérateur qui réamplifie et remet en forme les impulsions optiques du signal. Il comporte en outre un convertisseur de longueur d'onde qui change la longueur d'onde de la porteuse.

Par exemple, le dispositif de régénération et de conversion $124_1$ reçoit m/B porteuses de longueurs d'onde respectives $\lambda_1$, $\lambda_2$,..., $\lambda_{m/B}$ et restitue m/B porteuses de longueurs d'onde respectives $\lambda'_1$, $\lambda'_2$,..., $\lambda'_{m/B}$. Le dispositif de régénération et de conversion $124_B$ reçoit m/B porteuses de longueurs d'onde respectives $\lambda_{m-(m/B)+1}$, ..., $\lambda_m$ et restitue m/B porteuses de longueurs d'onde respectives $\lambda'_1$, $\lambda'_2$,..., $\lambda'm/B$. Ainsi, les longueurs d'onde de sortie de tous les convertisseurs de longueur d'onde des dispositifs de régénération et de conversion $124_1$, ..., $124_{NB}$ sont identiques, pour tous les sous-ensembles de porteuses $S_{11}$,..., $S_{1B}$.

On obtient donc des sous-ensembles de porteuses ayant les mêmes longueurs d'onde $\lambda'_1$, ..., $\lambda'_{m/B}$. Cette disposition permet de simplifier la réalisation du commutateur optique selon l'invention puisque le nombre de longueurs d'onde traitées par la suite est réduit de m à m/B, permettant, par exemple, d'utiliser des amplificateurs fonctionnant avec une fenêtre de longueurs d'onde plus étroite que dans le commutateur connu. Ils sont donc moins coûteux.

Les porteuses des sous-ensemble $S_{11}$, ..., $S_{NB}$ obtenues respectivement à la sortie des dispositifs de régénération $124_1$, ..., $124_{NB}$ sont rassemblées respectivement par un multiplexeur $126_{11}$, ..., $126_{NB}$ correspondant chacun à un sous-ensemble de porteuses. Ainsi, à la sortie de ces multiplexeurs $126_{11}$, $126_{12}$, ..., $126_{NB}$, on obtient au total N x B signaux $G_{11}$, ..., $G_{1B}$, ..., $G_{N1}$, ..., $G_{NB}$ correspondant chacun à un sous-ensemble de porteuses.

On rappelle ici que, dans notre exemple, un sous-ensemble de porteuses transmet un message qui est divisé en plusieurs parties, et dont chaque partie est transmise sur une porteuse du sous-ensemble. Les porteuses relatives à un même message sont donc regroupées en un seul signal $G_{ij}$. Dés lors il est possible d'acheminer toutes les parties de ce message vers une même fibre de sortie $146_1$, ..., ou $146_N$, en acheminant le signal $G_{ij}$ vers cette fibre .

Les signaux $G_{11}$, ..., $G_{1B}$, ..., $G_{N1}$, ..., $G_{NB}$ issus des multiplexeurs $126_{11}$, $126_{12}$, ..., $126_{NB}$ sont amplifiés par des amplificateurs 128 à fibres dopées à l'Erbium. Ce type d'amplificateur présente l'avantage d'amplifier les signaux avec un rapport signal à bruit et une puissance de sortie bien supérieurs, par rapport à ceux des amplificateurs optiques à semiconducteurs. Après avoir été amplifiés par les amplificateurs 128, les signaux $G_{11}$, ..., $G_{1B}$, ..., $G_{N1}$, ..., $G_{NB}$ sont diffusés respectivement par N diffuseurs $115_1$, ...,$115_N$, puis acheminés vers les organes de sélections $122_1$, $122_2$, ..., $122_{NB}$ au moyen de fibres optiques ou de conducteurs optiques tels que des guides d'ondes (plus précisément des coupleurs optiques) planaires.

Chaque organe de sélection $122_1$, ..., $122_{NB}$ comporte :

- un dispositif de commutation, respectivement $129_1$, ..., $129_{NB}$ qui sélectionne un des sous-ensembles de porteuses parmi les N.B sous-ensembles diffusés par les diffuseurs $115_1$, ..., $115_{NB}$ ;
- et un démultiplexeur $142_1$, ..., $142_{NB}$, qui sépare les m/B porteuses de longueurs d'onde $\lambda'_1$, $\lambda'_2$,..., $\lambda'_{m/B}$ du sous-ensemble sélectionné par le dispositif de commutation spatiale, respectivement $129_1$, ..., $129_{NB}$, et qui applique ces porteuses respectivement à m/B dispositifs de régénération et de conversion $145_{11}$,..., $145_{1m/B}$.

Chaque dispositif de commutation spatiale $129_i$ comporte :

- Un ensemble de NB retardateurs $130_{ij}$ qui permettent d'affecter à chaque signal reçu un retard qui est fonction de sa priorité. L'ordre de priorité est, par exemple, inclus dans le signal Gij lui-même. Ainsi, on affectera un retard d'autant plus faible que la priorité est plus importante.
- Un ensemble $132_i$ de NB portes optiques qui permettent de choisir un seul des signaux retardés, et donc valident une seule des entrées de ce dispositif de commutation spatiale 129i. Ces portes sont constituées d'amplificateurs optiques à semi-conducteur. Un amplificateur optique à semi-conducteur, à gain constant ou non, est activé lorsque le signal qu'il reçoit doit être sélectionné pour une transmission. Une seule porte est activée à la fois. On observera que les retardateurs $130_{ij}$ permettent de conserver les signaux qui n'ont pas été sélectionnés. En effet, en l'absence de tels retardateurs, les signaux non sélectionnés seraient définitivement perdus.
- Un dispositif d'amplification commutée $134_i$ ayant NB entrées reliées respectivement aux sorties de l'ensemble de portes 132i. Son rôle est d'assurer au signal transmis une puissance convenable lors de la recombinaison des sorties des différentes portes optiques 132i en évitant une addition de bruit optique de ces amplificateurs. La sortie du dispositif d'amplification $134_i$ constitue une sortie $140_i$ du dispositif de commutation spatiale 129i.

Ainsi, par rapport au commutateur connu représenté sur la figure 1, le nombre total d'opérations de sélection est réduit puisque le nombre d'organes de sélection $122_1$, ..., $122_{NB}$ est N x B alors que dans le commutateur connu, le nombre total d'organes de sélection est N x m, B étant un sous-multiple de m. Autrement dit, le fait de traiter ensemble et de transmettre ensemble les porteuses d'un sous-ensemble simplifie considérablement la réalisation du commutateur optique, peut réduire le nombre de composants, et assure une meilleure qualité de traitement du signal.

Le nombre total d'organes de sélection $122_1$, $122_2$, ..., $122_{NB}$ est N.B, et chaque organe de sélection $122_i$ comporte N.B entrées. Chaque signal Gij est appliqué sur une entrée correspondante ij de chaque organe de sélection $122_1$, $122_2$, ..., $122_{NB}$. Ainsi, le signal $G_{11}$ provenant d'une sortie d'un des amplificateurs 128 est transmis sur les entrées d'indice 11 des organes de sélection $122_1$, $122_2$, ..., $122_{NB}$. A chaque entrée de chaque organe de sélection est associé un retardateur $130_{11}$,..., $130_{N2B2}$ qui permet d'affecter à chaque signal reçu un retard qui est fonction de sa priorité. L'ordre de priorité est, par exemple, inclus dans le signal Gij lui-même. Ainsi, on affectera un retard d'autant plus faible que la priorité est plus importante.

Le démultiplexeur $142_i$ fournit donc sur m/B sorties les porteuses d'un sous-ensemble de porteuses dont les longueurs d'onde sont respectivement $\lambda'1$ à $\lambda'_{m/B}$. Ensuite, chaque porteuse est traitée individuellement par un dispositif de régénération et de conversion de longueur d'onde, respectivement $145_{11}$, $145_{12}$, ..., $145_{Nm}$, réalisant des fonctions similaires à celles d'un dispositif de régénération et de conversion $124_1$, ..., $124_{NB}$. Chacun comporte un convertisseur pour modifier la longueur d'onde des porteuses de façon à pouvoir transmettre dans une même fibre m porteuses de longueurs d'onde différentes $\lambda_1$, $\lambda_2$,...$\lambda_m$.

Un multiplexeur, respectivement $150_1$, $150_2$... $150_N$, rassemble m porteuses de longueurs d'onde $\lambda_1$, $\lambda_2$,...$\lambda_m$ fournies par B organes de sélection $122_i$ de façon que chaque fibre de sortie ,$146_1$ à $146_N$, transmette effectivement les m porteuses sur les m longueurs d'onde d'entrée. Il est à noter que le nombre de longueurs d'onde de sortie est, en général, égal au nombre de longueurs d'onde d'entrée et, que chaque longueur d'onde $\lambda_i$, reçue en entrée, se retrouve à la sortie. Toutefois, il est possible de choisir des valeurs de longueurs d'onde de sortie différentes des valeurs de longueurs d'onde d'entrée.

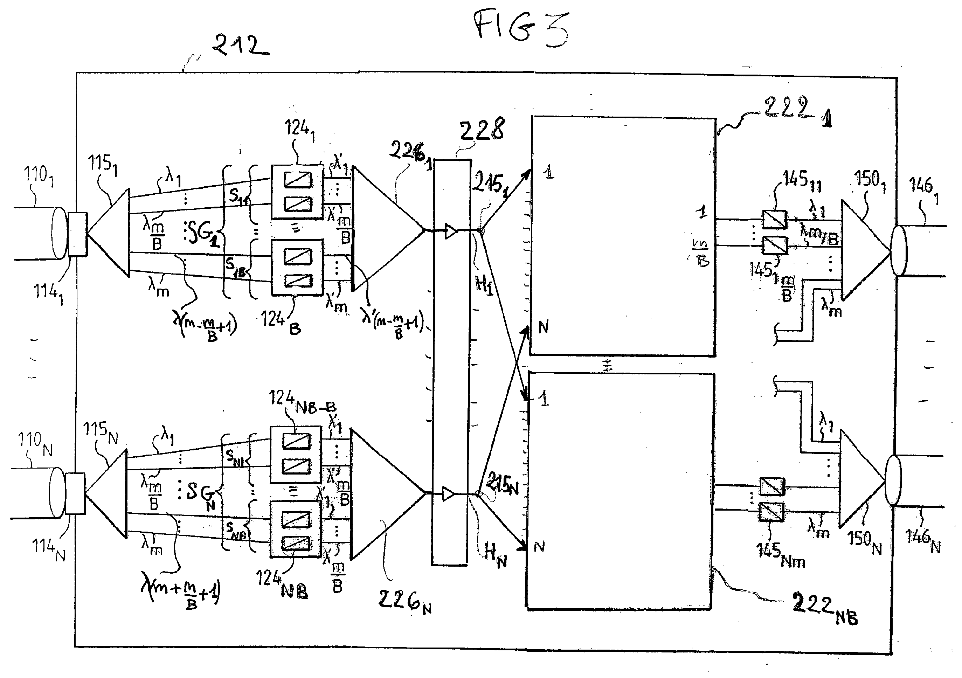

La **figure 3** représente le schéma synoptique d'un deuxième mode de réalisation 212 utilisant N' groupes de B' sous-ensembles de B porteuses. Par exemple, le commutateur 212 regroupe les m porteuses arrivant par la fibre d'entrée $110_1$ en B sous-ensembles, $S_{11}$, ...., $S_{1B}$, chacun comportant m/B porteuses. Il regroupe les m porteuses arrivant par la fibre d'entrée $110_N$ en B sous-ensembles $S_{N1}$, ...., $S_{NB}$. Tous les sous-ensembles comprennent m/B signaux ayant respectivement m/B longueurs d'onde distinctes $\lambda_1$, $\lambda_2$,..., $\lambda_{m/B}$.

Le commutateur 212 regroupe ensuite ces NB sous-ensembles en N' groupes comportant chacun B' sous-ensembles de porteuses. A titre d'exemple, N'=N et B'=B, dans le mode de réalisation représenté sur la figure 3. Ainsi le groupe $SG_1$ comporte les sous-ensembles $S_{11}$, ...., $S_{1B}$. Le groupe $SG_N$ comporte les sous-ensembles $S_{N1}$, ...., $S_{NB}$.

Les éléments qui sont semblables à ceux du commutateur 112 portent les mêmes références. Le commutateur 212 comporte :

- N entrées connectées chacune à une fibre optique, $110_1$, $110_2$, ..., $110_N$ transmettant des signaux multiplexés en longueurs d'onde ;
- N dispositifs de synchronisation $114_1$, $114_2$ ..., $114_N$, analogues à ceux du commutateur 112 (figure 2) ;
- N dispositif de régénération et de conversion de longueur d'onde $124_1$, ..., $124_{NB}$ analogues à ceux du commutateur 112 (figure 2) ;
- N dispositifs multiplexeurs $226_1$, ..., $226_N$ ;
- N amplificateurs optiques 228 ;
- N diffuseurs $215_1$, ...,$215_N$;
- N organes de sélection $222_1$, ..., $222_{NB}$ ;
- N.m dispositif de régénération et de conversion de longueur d'onde $145_1$, ...., $145_{Nm}$ analogues à ceux du commutateur 112 (figure 2);
- N multiplexeurs optiques $150_1$, ..., $150_N$ analogues à ceux du commutateur 112 (figure 2);
- N sorties connectées chacune à une fibre optique, $146_1$, $146_2$, ..., $146_N$ transmettant des signaux multiplexés en longueurs d'onde.

Chaque organe de sélection $222_1$, ..., $222_{NB}$ comporte :

- N entrées reliées respectivement à N sorties de N amplificateurs 228, fournissant respectivement N signaux $H_1$, ..., $H_N$.
- m/B sorties reliées respectivement à m/B entrées de l'un des dispositifs $145_{11}$, ..., $145_{Nm}$ de régénération et conversion de longueur d'onde.

Ce mode de réalisation diffère du premier par le fait que l'étage de diffusion comporte N multiplexeurs $226_1$, $226_1$, ..., $226_N$ à m entrées, et N amplificateurs 228 ; au lieu de N.B multiplexeurs $126_1$, ..., 126N à m/ B entrées, et N.B amplificateurs 128. Mais en outre, les NB organes de sélection $222_1$, ..., $222_{NB}$ sont différents car ils sont optimisés pour tirer avantage du fait que les sous-ensembles de porteuses sont regroupés. Chaque organe de sélection $222_1$, ..., $222_{NB}$ peut sélectionner une pluralité de sous-ensembles de porteuses simultanément, et non un sous-ensemble unique comme dans le commutateur 112.

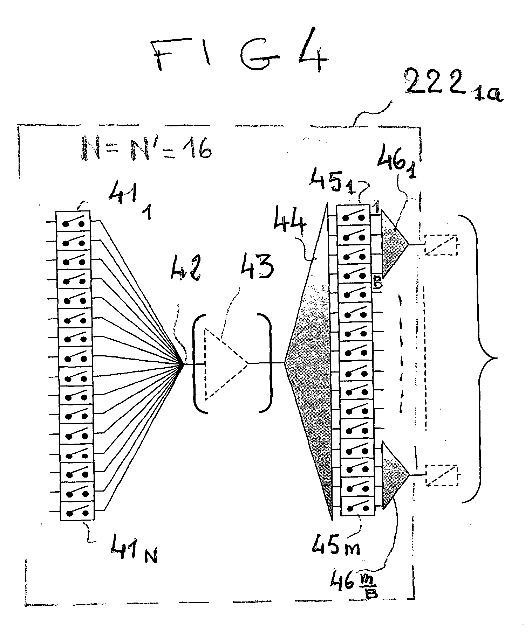

La **figure 4** représente le schéma d'un premier exemple $222_{1a}$ de réalisation de l'organe de sélection $222_1$ pris à titre d'exemple, pour N=N'=16. Il comporte :

- N portes optiques $41_1$, ..., $41_N$ reliant respectivement les N entrées de l'organe 221a à un coupleur 42 ayant N entrées et une seule sortie ;
- un amplificateur optique 43, optionnel, à fibre dopée à l'erbium, ayant une entrée reliée à la sortie du coupleur 42 ;
- un démultiplexeur 44 ayant une entrée reliée à la sortie de l'amplificateur 43, et ayant N sorties ;
- m portes optiques $45_1$,..., $45_m$ reliées respectivement aux sorties du démultiplexeur 44 ;
- et m/B multiplexeurs $46_1$, ..., $46_{m/B}$ à B entrées et une sortie chacun, chaque entrée étant respectivement reliée à une sortie du démultiplexeur 44, et les m/B sorties de ces démultiplexeurs constituant les sorties de l'organe de sélection $221_a$.

Les portes $41_1$, ..., $41_N$ sont utilisées pour sélectionner un groupe de sous-ensembles de porteuses parmi $SG_1$, ..., $SG_N$. Dans l'exemple représenté, N est égal à 16. Les portes 451,..., 45N sont utilisées pour sélectionner m/B porteuses et les fournir respectivement aux m/B multiplexeurs 461, ..., 46m/B. Le nombre d'entrées de chaque multiplexeur 461, ..., 46m/B est choisi égal au nombre de porteuses par sous-ensemble (quatre, dans l'exemple représenté sur cette figure).

La **figure 5** représente le schéma d'un deuxième exemple $222_{1b}$ de réalisation de l'organe de sélection $222_1$ pris à titre d'exemple, pour N=N'=16. Il comporte :

- N portes optiques $50_1$, ..., $50_N$ réparties par groupes de N/p ; chaque groupe de N/p reliant respectivement N/p entrées de l'organe 221b à un coupleur $51_1$, ..., ou $51_p$ ayant N/p entrées et une seule sortie (la figure représente un exemple où p=4 et N=16) ;
- p portes optiques $52_1$, ..., 52p ayant leurs entrées reliées respectivement aux sorties des coupleurs $51_1$, ..., 51p ;
- un coupleur 53 ayant p entrées reliées respectivement aux sorties des portes $52_1$, ..., 52p , et ayant B sorties ;
- B portes optiques $54_1$, ..., ou $54_B$ ayant leurs entrées reliées respectivement aux sorties du coupleur 53 ;
- un dispositif de démultiplexage 55 ayant B entrées reliées respectivement aux sorties des portes optiques $54_1$, ..., ou $54_B$ et m/B sorties constituant les sorties de l'organe $222_{1b}$.

Ce mode de réalisation du commutateur selon l'invention nécessite moins de portes optiques que le commutateur selon l'art antérieur, représenté sur la figure 1. Chaque organe de sélection comporte N+2.B portes optiques, soit, au total, N.B.(N+2B) portes pour tout le commutateur. Dans ces conditions, si N = 16 et B = 4, le nombre total de portes est de 1536. Dans un commutateur classique, pour lequel N=16 et m=16, le nombre de portes optiques utilisées pour chaque organe de sélection est :

m.N. (m + N) = 8192 Ainsi, dans cet exemple, le nombre d'amplificateurs optiques du commutateur selon l'invention est, toutes choses égales par ailleurs, plus de 5 fois moins important que dans le commutateur classique.

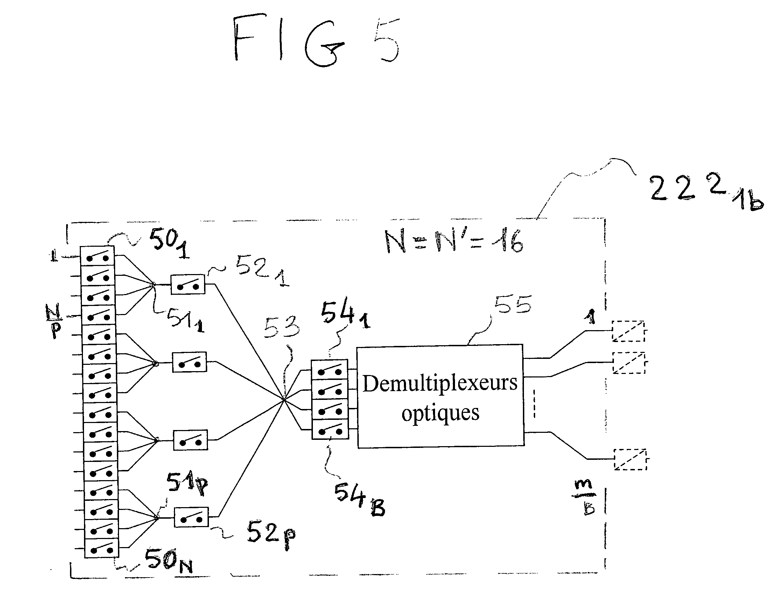

Dans l'exemple représenté sur la figure 5, N=16 et B=p=4. Les figures 6 à 9 représentent les schémas synoptiques de différentes variantes de réalisation pour le dispositif de démultiplexage 55 dans le cas où m=16 et B=4.

**La figure 6** représente une variante 55a comportant :

- un premier étage de B démultiplexeurs ayant chacun une entrée et m/B sorties ;
- et un second étage de m/B coupleurs ayant chacun B entrées reliées respectivement à une sortie de chacun des démultiplexeurs du premier étage ; et m/B sorties constituant les sorties du dispositif 55a.

**La figure 7** représente une variante 55b comportant :

- un premier étage de B démultiplexeurs ayant chacun une entrée et m/B sorties ;
- et un second étage de m/B multiplexeurs ayant chacun B entrées reliées respectivement à une sortie de chacun des démultiplexeurs du premier étage ; et m/B sorties constituant les sorties du dispositif 55b.

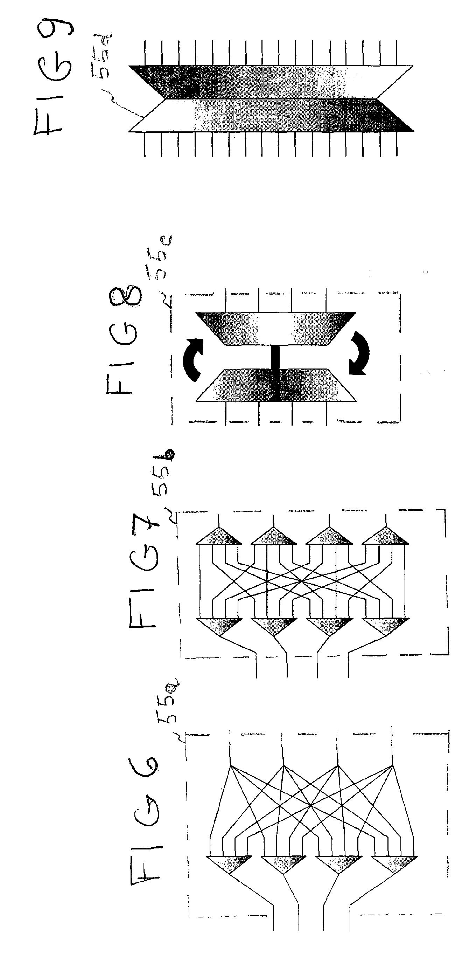

**La figure 8** représente une variante 55c comportant,

- si les sous-ensembles de porteuses correspondent à des longueurs d'ondes adjacentes :

-- un premier étage constitué d'un multiplexeur de bandes de longueurs d'onde, ayant B entrées et 1 sortie; ces entrées constituant les entrées du dispositif 55c ;
-- et un second étage constitué d'un entrelaceur de porteuses, ayant 1 entrée et m/B sorties, les entrées de cet entrelaceur étant reliées respectivement aux sorties du premier étage, et ses sorties constituant les sorties du dispositif 55c.

- si les sous-ensembles de porteuses correspondent à des longueurs d'ondes entrelacées :

-- un premier étage constitué d'un entrelaceur de porteuses, ayant B entrées et 1 sortie ; ces entrées constituant les entrées du dispositif 55c ;
-- et un second étage constitué d'un multiplexeur de bandes de longueurs d'onde, ayant 1 entrée et m/B sorties, les entrées de ce multiplexeur étant reliées aux sorties du premier étage, et ses sorties constituant les sorties du dispositif 55c.

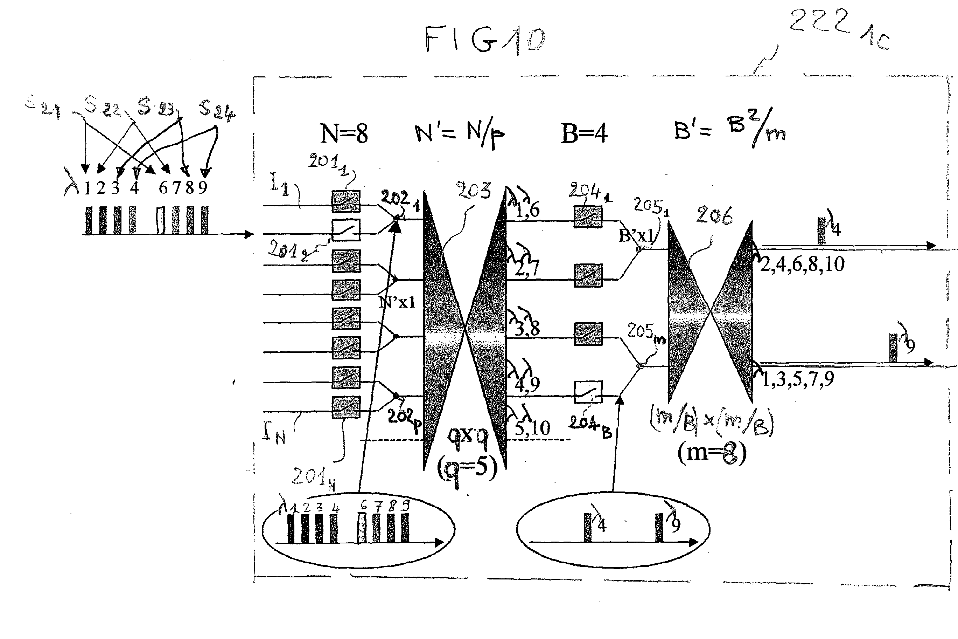

**La figure 9** représente une variante 55d comportant un réseau de guides d'onde ayant au moins m guide d'ondes dans sa structure interne. Ce réseau doit présenter au moins B entrées et m/B sorties, m/B de ces sorties constituant les sorties du dispositif 55c. Il est à noter que suivant l'agencement respectif des entrées et des sorties utilisées ce dispositif peut assurer le démultiplexage de sous-ensemble de porteuses correspondant à des longueurs d'onde adjacentes ou entrelacées.

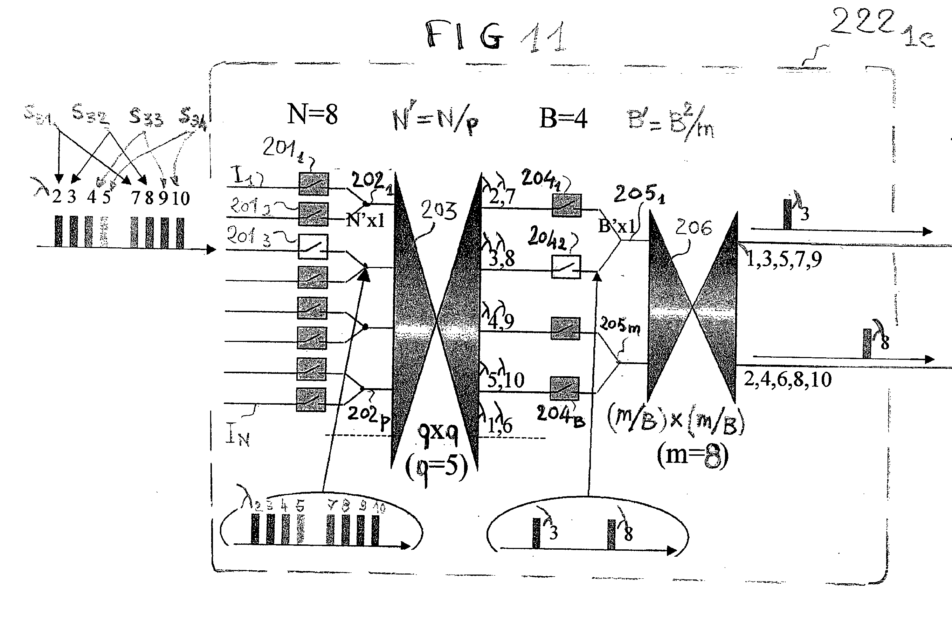

**La figure 10** représente le schéma d'un troisième exemple de réalisation $222_{1c}$ de l'organe de sélection $222_1$ pris à titre d'exemple. Dans cet exemple, le nombre N de groupes est égal à 8, et le nombre N' de sous-ensembles par groupe de sous-ensembles de porteuses est égale à 2. Il comporte :

- un étage de sélection spatiale constitué de N portes optiques $201_1$, ..., $201_N$ réparties par groupes de N/p; ces portes étant reliées respectivement aux N entrées de l'organe $222_{1c}$;
- p coupleurs $202_1$, ..., 202p ayant chacun N/p entrées et une sortie, ces entrées étant reliées respectivement à N/p sorties d'un groupe de portes optiques $201_1$, ..., $201_N$ de l'étage de sélection spatiale ;
- un premier réseau de guides d'onde 203, cyclique, ayant q entrées telles que q soit plus grand que p ; p entrées parmi les q entrées de ce réseau étant reliées respectivement aux p sorties des coupleurs $202_1$, ..., 202p ;
- un étage de sélection de sous-ensemble de porteuses, constitué de B portes optiques $204_1$, ..., $204_B$ ayant leurs entrées reliées respectivement à B sorties du réseau 203 ;
- m/B coupleurs $205_1$, ..., 205p ayant chacun $B^2/m$ entrées et une sortie, ces $B^2/m$ entrées étant reliées respectivement à des sorties du réseau de guides d'onde 203 par l'intermédiaire des portes optiques $204_i$ ;
- un second réseau de guides d'onde 206, cyclique, ayant m/B entrées reliées respectivement aux m/B sorties des coupleurs $205_1$, ..., $205_{m/B}$, et ayant m/B sorties constituant les sorties de l'organe $222_{1c}$.

Dans l'exemple représenté N'=2, N=8, B'=2, B=4, p=4, q=5, m=8. Les nombres m/B et q doivent être premiers entre eux. La figure 10 illustre le fonctionnement de cet exemple de réalisation dans le cas de l'acheminement d'un sous-ensemble $S_{24}$ constitué de deux porteuses, référencées $\lambda_4$ et $\lambda_9$, parmi huit porteuses référencées $\lambda_1$, $\lambda_2$, $\lambda_3$, $\lambda_4$, $\lambda_6$, $\lambda_7$, $\lambda_8$, $\lambda_9$ arrivant sur la deuxième porte optique $201_2$. Les références des porteuses transmises sont indiquées près des sorties des composants. Les sorties du réseau 203 sont susceptibles de restituer respectivement les sous-ensembles de porteuses :

$S_{21}$ : $\lambda_1$, $\lambda_6$
$S_{22}$ : $\lambda_2$, $\lambda_7$
$S_{23}$ : $\lambda_3$, $\lambda_8$
$S_{24}$ : $\lambda_4$, $\lambda_9$

Le sous-ensemble de porteuses $\lambda_5$, $\lambda_{10}$ n'intervient pas dans cet exemple car il aboutit à une sortie non utilisée du réseau 203.

Les sorties du réseau 206 sont susceptibles de restituer respectivement les porteuses suivantes :

$\lambda_2$, $\lambda_4$, $\lambda_6$, $\lambda_8$, $\lambda_{10}$
$\lambda_1$, $\lambda_3$, $\lambda_5$, $\lambda_7$, $\lambda_9$

La porte $201_2$ permet de sélectionner toutes les porteuses $\lambda_1$, $\lambda_2$, $\lambda_3$, $\lambda_4$, $\lambda_6$, $\lambda_7$, $\lambda_8$, $\lambda_9$ arrivant sur cette porte optique. Elle est commandée pour laisser passer ces porteuses. Les autres portes $201_i$ sont bloquées. Le réseau 203 restitue les porteuses $\lambda_4$ et $\lambda_9$ seulement, sur sa sortie qui est reliée à la porte $204_B$. Cette porte $204_B$ est commandée pour laisser passer ces porteuses. Les autres portes $204_i$ sont bloquées. Le coupleur $205_m$ transmet ces porteuses $\lambda_4$, $\lambda_9$ ensemble au réseau 206. Ce dernier les démultiplexe et les restitue sur deux sorties distinctes.

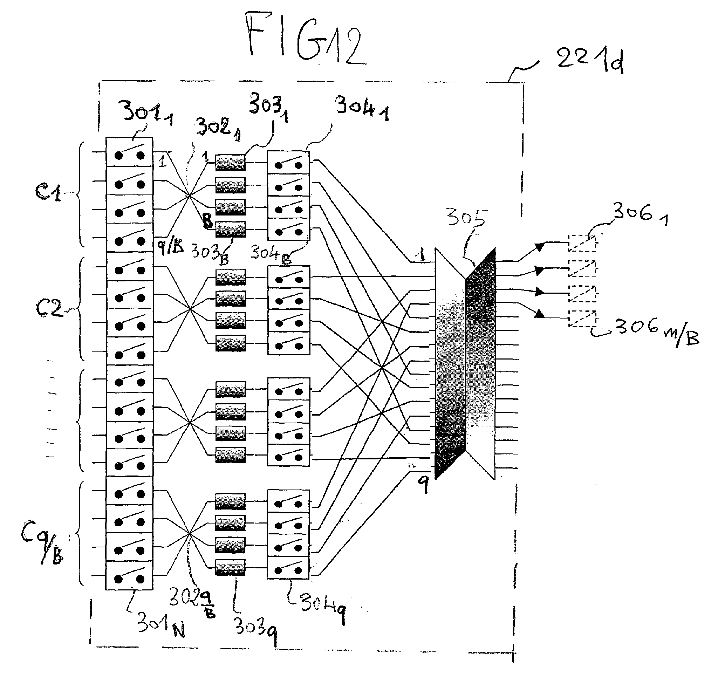

La **figure 11** représente le même exemple de réalisation que la figure 10 mais illustre le fonctionnement dans le cas de l'acheminement d'autres porteuses, appliquées à la porte $202_3$, regroupées en sous-ensembles $S_{31}$, $S_{32}$, $S_{33}$, $S_{34}$.

$S31$ : $\lambda_2$, $\lambda_7$
$S32$ : $\lambda_3$, $\lambda_8$
$S33$ : $\lambda_4$, $\lambda_9$
$S34$ : $\lambda_5$, $\lambda_{10}$

Le peigne de porteuses est décalé pour chaque port d'entrée du réseau 203. Par conséquent, le peigne de porteuses arrivant sur la porte $201_3$ est $\lambda_2$, $\lambda_3$, $\lambda_4$, $\lambda_5$, $\lambda_7$, $\lambda_8$, $\lambda_9$, $\lambda_{10}$. Le sous-ensemble de porteuses $\lambda_6$, $\lambda_{11}$ n'intervient pas dans cet exemple car il aboutit à une sortie non utilisée du réseau 203.

La porte $201_3$, par exemple, permet de sélectionner toutes les porteuses, $\lambda_2$, $\lambda_3$, $\lambda_4$, $\lambda_5$, $\lambda_7$, $\lambda_8$, $\lambda_9$, $\lambda_{10}$ arrivant sur la porte optique $201_3$. Dans cet exemple, elle est commandée pour laisser passer ces porteuses.

Les autres portes $201_i$ sont bloquées. Dans cet exemple, les porteuses référencées $\lambda_3$ et $\lambda_8$ sont transmissibles par le port du réseau 203 qui est relié à cette porte. Le réseau 203 restitue les porteuses $\lambda_3$ et $\lambda_8$ seulement sur sa sortie qui est reliée à la porte $204_2$. Cette porte $204_2$ est commandée pour laisser passer ces porteuses. Les autres portes $204_i$ sont bloquées. Le coupleur $205_1$ transmet ces porteuses $\lambda_3$ et $\lambda_8$ ensemble au réseau 206. Ce dernier les démultiplexe et les restitue sur deux sorties distinctes.

Ce mode de réalisation du commutateur selon l'invention nécessite moins de portes optiques que le commutateur selon l'art antérieur, représenté sur la figure 1. Chaque organe de sélection comporte N+B portes optiques, soit, au total, N.B.(N+B) portes pour tout le commutateur. Dans ces conditions, si N = 16 et B = 4, le nombre total de portes est de 1280. Dans un commutateur classique, pour lequel N=16 et m=16, le nombre de portes optiques utilisées pour chaque organe de sélection est :

m.N.(m + N) = 8192 Ainsi, dans cet exemple, le nombre d'amplificateurs optiques du commutateur selon l'invention est, toutes choses égales par ailleurs, plus de 6 fois moins important que dans le commutateur classique.

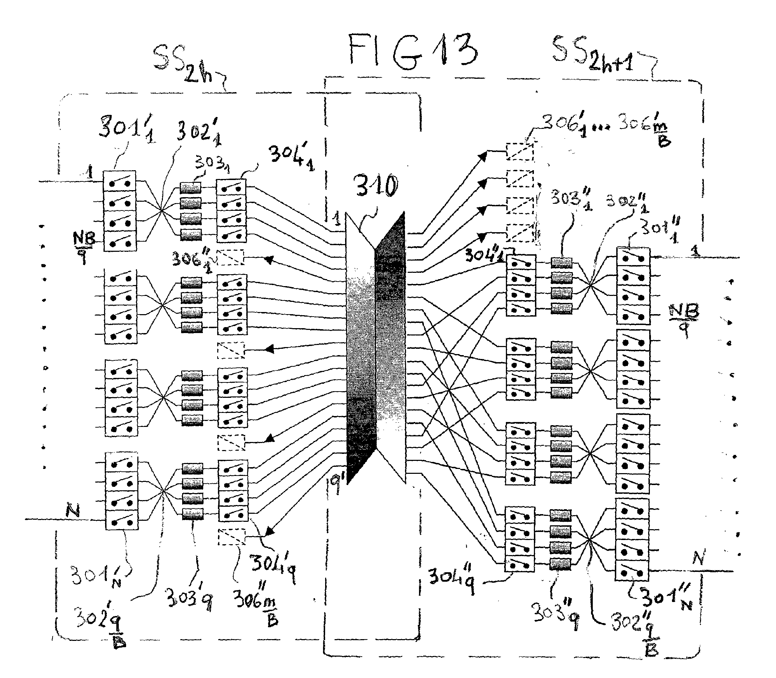

La **figure 12** représente le schéma synoptique d'un quatrième exemple de réalisation $222_{1d}$ de l'organe de sélection $222_1$ pris à titre d'exemple, pour N= 16, B= 16. Il comporte :

- un étage de sélection spatiale constitué de N portes optiques $301_1$, ..., $301_N$ réparties par groupes de N. B/q correspondant chacun à un peigne de longueurs d'onde, $C_1$, ..., $C_{q/B}$ (un groupe de sous-ensembles de porteuses) ;
- q/B coupleurs $302_1$, ..., $302_{q/B}$ ayant chacun N.B/q entrées et B sorties, les entrées de chaque coupleur étant reliées aux sorties des portes optiques $301_1$, ..., $301_N$;
- q filtres optiques $303_1$, ..., 303q, optionnels, reliés respectivement aux q sorties des coupleurs $302_1$, ..., 302q/B;
- un étage de sélection d'un sous-ensemble de porteuses, constitué de q portes optiques $304_1$,..., 304q ayant des entrées reliées respectivement aux sorties des filtres $303_1$, ..., 303q ;
- un démultiplexeur 305, ayant q entrées reliées respectivement aux q sorties des portes $303_1$, ..., 303q, et ayant au moins m/B sorties constituant les sorties de l'organe de sélection $222_{1d}$; q étant choisi supérieur à m.

Ce démultiplexeur 305 peut être réalisé avec un réseau à guide d'onde ou avec un filtre optique dans une configuration dite "modifiée Littman-Metcalf". Les q filtres optiques passe-bande $303_1$, ..., 303q, permettent d'augmenter la puissance fournie par les amplificateurs optiques constituant les portes, en éliminant des porteuses inutiles des sous-ensembles de longueurs d'onde non désirés. Sans ces filtres, ces derniers consommeraient une partie de la puissance disponible.

Dans le mode de réalisation préféré, illustré par la figure 12, il s'agit de filtres passe-bande, les bandes doivent donc être adjacentes. Chaque peigne de longueurs d'onde $C_1$, ..., $C_{q/B}$ est décalé, par rapport au peigne suivant, de quatre longueurs d'onde pour que le réseau 305 route correctement les longueurs d'onde de chaque peigne. Le nombre q d'entrées (et de sorties) du réseau 305 est égal à seize. Seulement m/B sorties sont utilisées pour constituer les sorties reliées à des dispositifs de régénération et de conversion de longueur d'onde $306_1$, ..., $306_{m/B}$. Donc q-(m/B) sorties du réseau 305 sont inutilisées.

Il est possible d'utiliser plus complètement ces sorties, compte tenu du fait que les accès du réseau 305 sont bidirectionnels. En effet, il est possible d'utiliser les sorties inutilisées comme entrées, dans ce quatrième mode de réalisation, et dans le troisième mode de réalisation (Figures 10 et 11).

A titre d'exemple, **la figure 13** représente le schéma d'une variante du quatrième exemple de réalisation de l'organe de sélection $222_{1d}$, pour N= 16, B= 16. Cette variante comporte un même réseau 310 pour deux étage de commutation $SS_{2h}$ et $SS_{2h+1}$, ce réseau étant utilisé bidirectionnellement. L'étage de commutation SS2h comporte :

- un étage de sélection spatiale constitué de N portes optiques $301'_1$, ..., $301'_N$ réparties par groupes de N.B/q portes correspondant chacun à un peigne de longueurs d'onde ;
- q/B coupleurs $302'_1$, ..., $302'_{q/B}$ ayant chacun N.B/ q entrées et B sorties, les entrées de chaque coupleur étant reliées respectivement aux sorties d'un groupe de N.B/q portes optiques $301'_1$, ..., $301'_N$ ;
- q filtres optiques passe-bande $303'_1$, ..., $303'_q$ , optionnels, reliés respectivement aux q sorties des coupleurs $302'_1$, ..., $302'_{q/B}$ ;
- un étage de sélection d'un sous-ensemble de porteuses, constitué de q portes optiques $304'_1$,..., $304'q$ ayant des entrées reliées respectivement aux sorties des filtres $303'_1$, ..., $303'q$ ;
- un démultiplexeur constitué par un réseau de guides d'onde 310, ayant q' accès sur le côté gauche, constituant :

  -- q entrées reliées respectivement aux q sorties des portes $303'_1$, ..., $303'q$,
  -- et q'-q sorties parmi lesquelles m/B sorties constituent les sorties de l'étage $SS_{2h+1}$, et pouvant être reliées à des dispositifs de régénération et de conversion de longueur d'onde, $306''_1$, ..., $306''_{m/B}$ ; q étant choisi supérieur à m.

L'étage de commutation $SS_{2h+1}$ comporte :

- un étage de sélection spatiale constitué de N portes optiques $301''_1$, ..., $301''_N$ réparties par groupes de N.B/q portes correspondant chacun à un peigne de longueurs d'onde ;
- q/B coupleurs $302''_1$, ..., $302''_{q/B}$ ayant chacun N.B/ q entrées et B sorties, les entrées de chaque coupleur étant reliées respectivement aux sorties d'un groupe de N.B/q portes optiques $301''_1$, ..., $301''_N$ ;
- q filtres optiques passe-bande $303''_1$, ..., $303''q$, optionnels, reliés respectivement aux q sorties des coupleurs $302''_1$, ..., $302''q/B$ ;
- un étage de sélection d'un sous-ensemble de porteuses, constitué de q portes optiques $304''_1$,..., $304''q$ ayant des entrées reliées respectivement aux sorties des filtres $303''_1$, ..., $303''q$ ;
- un démultiplexeur constitué par le réseau de guides d'onde 310, parcouru en sens inverse, son côté droit ayant q' accès constituant :

  -- q entrées reliées respectivement aux q sorties des portes $303'_1$, ..., $303'q$,
  -- et q'-q sorties parmi lesquelles m/B sorties constituent les sorties de l'étage $SS_{2h}$, et pouvant être reliées à des dispositifs de régénération et de conversion de longueur d'onde, $306'_1$, ..., $306'_{m/B}$.

Il est à la portée de l'homme de l'Art de modifier de manière analogue le troisième mode de réalisation représenté sur la figure 10 afin d'utiliser un même réseau de guides d'onde pour au moins deux étages de commutation distincts.

Un mode de réalisation des peignes de longueurs d'onde peut comporter des longueurs d'onde régulièrement réparties, par exemple chaque sous-ensemble comprend quatre porteuses avec des intervalles tous égaux à 100GHz. Pour réduire les phénomènes d'intermodulation dus aux non linéarités dans la réponse des amplificateurs, il peut être avantageux de répartir les porteuses de manière moins régulière, par exemple chaque sous-ensemble comprenant quatre porteuses avec des intervalles respectivement égaux à 100Ghz, 200GHz, 100Ghz; et deux sous-ensembles voisins étant séparés par un intervalle de 100GHz. Dans un autre exemple, chaque sous-ensemble comprend quatre porteuses avec des intervalles respectivement égaux à 200GHz, 100GHz, 100GHz; et deux sous-ensembles voisins sont séparés par un intervalle de 100GHz.

## Revendications

1. Commutateur (112) de signaux optiques comportant un nombre de sorties au moins égal au nombre N d'entrées, pour acheminer un signal d'entrée vers au moins une sortie, chaque entrée étant destinée à recevoir des signaux modulant des porteuses optiques ayant m longueurs d'onde différentes ($\lambda_1$, $\lambda_2$, ..., $\lambda_m$);

**caractérisé en ce qu'**il comporte :

- des moyens ($126_{11}$, ..., $126_{NB}$; $226_{11}$, ..., $226_{NB}$) pour grouper l'ensemble des porteuses reçues sur une entrée du commutateur en sous-ensembles disjoints ($S_{11}$, ..., $S_{1B}$) de porteuses ;
- des organes de sélection ($129_1$, ..., $129_{NB}$; $229_1$, ..., $229_{NB}$) pour acheminer en bloc ($G_{11}$, ..., $G_{NB}$) les signaux correspondant à chaque sous-ensemble de porteuses optiques ;
- et des moyens (142, 145, 150) pour décomposer chaque sous-ensemble, puis transmettre toutes les porteuses de ce sous-ensemble vers une même sortie du commutateur.

2. Commutateur selon la revendication 1, **caractérisé en ce qu'**il comporte en outre :

- des moyens ($226_1$,..., $226_N$) pour grouper l'ensemble des sous-ensembles ($S_{11}$, ..., $S_{1B}$) de porteuses, en groupes disjoints ($SG_1$, ..., $SG_N$) de sous-ensembles ;
- des moyens ($229_1$, ..., $229_{NB}$) pour acheminer en bloc ($H_1$, ..., $H_N$) les informations correspondant à une pluralité de sous-ensembles de porteuses ;
- et des moyens (44, 45, 46; 54 , 55; 206; 305; 310) pour sélectionner un seul sous-ensemble de porteuses par sortie du commutateur.

3. Commutateur selon la revendication 1, **caractérisé en ce qu'**il comporte des moyens ($124_1$,....,$124_B$) pour convertir les longueurs d'onde des porteuses de chaque sous-ensemble en longueurs d'onde ($\lambda'_1$, ..., $\lambda'_{m/B}$) de valeurs prédéterminées se trouvant dans une fenêtre spectrale sensiblement plus étroite que la fenêtre dans laquelle se trouvent les m longueurs d'onde à l'entrée du commutateur, afin que les organes de sélection ($129_1$, $129_2$, ..., $129_{NB}$) traitent des longueurs d'onde sur une fenêtre spectrale réduite par rapport à la fenêtre spectrale des m longueurs d'onde à l'entrée du commutateur.

4. Commutateur selon la revendication 3, **caractérisé en ce qu'**il comprend des moyens de conversion à la suite des organes de sélection ($129_1$, $129_2$, ..., $129_{NB}$) pour transformer les longueurs d'onde ($\lambda'_1$, $\lambda'_2$,... $\lambda'_{m/B}$) des porteuses de chaque sous-ensemble ($S_{11}$, ...,$S_{NB}$) sélectionné.

5. Commutateur selon la revendication 1, **caractérisé en ce qu'**il comporte N.B organes de sélection ($122_1$, ..., $122_{NB}$), N étant le nombre d'entrées du commutateur et B le nombre de sous-ensembles de porteuses reçus à une même entrée,

et **en ce que** chacun de ces organes de sélection ($122_1$, ..., $122_{NB}$) comporte N.B amplificateurs optiques ($132_1$, ..., $132_{NB}$), chacun étant associé à une entrée correspondante de l'organe de sélection ; cet amplificateur optique étant activé pour transmettre le signal appliqué à son entrée.

6. Commutateur selon la revendication 1, **caractérisé en ce qu'**il comporte en outre un moyen de retard variable ($130_{11}$, $130_{12}$, ..., $130_{N2B2}$) associé à chaque organe de sélection ($129_1$, $129_2$, ..., $129_{NB}$), et commandé de façon à retarder le signal ($G_{11}$, ..., $G_{1B}$, ..., $G_{N1}$, ..., $G_{NB}$) sélectionné par cet organe, en fonction de la priorité accordée à ce signal.

7. Commutateur selon la revendication 1, **caractérisé en ce qu'**il comporte en outre des moyens d'amplification (128) en amont des organes de sélection ($129_1$, $129_2$, ..., $129_{NB}$) pour amplifier les sous-ensembles de porteuses.

8. Commutateur selon la revendication 2, **caractérisé en ce qu'**un organe de sélection ($222_{1a}$) comporte :

- N portes optiques ($41_1$, ..., $41_N$) couplant respectivement N entrées de l'organe de sélection à un coupleur (42) ayant N entrées et une seule sortie ;
- un démultiplexeur (44) ayant une entrée couplée à la sortie du coupleur (42), et ayant N sorties ;
- N portes optiques ($45_1$,..., $45_m$) couplées respectivement aux sorties du démultiplexeur (44) ;
- et m/B multiplexeurs ($46_1$, ..., $46_{m/B}$) à B entrées et une sortie chacun, chaque entrée étant respectivement couplée à une sortie du démultiplexeur (44), et les m/B sorties de ces démultiplexeurs constituant les sorties de l'organe de sélection .

9. Commutateur selon la revendication 2, **caractérisé en ce qu'**un organe de sélection ($222_{1b}$) comporte :

- N portes optiques ($50_1$, ..., $50_N$) réparties par groupes de N/p ; chaque groupe de N/p portes étant couplé respectivement à N/p entrées de l'organe de sélection (221b) ;
- p coupleur ($51_1$, ..., ou $51_p$) ayant chacun N/p entrées couplées à N/p portes, et une seule sortie ;
- p portes optiques ($52_1$, ..., 52p) ayant leurs entrées couplées respectivement aux sorties des coupleurs ($51_1$, ..., 51p);
- un coupleur (53) ayant p entrées couplées respectivement aux sorties des portes ($52_1$, ..., 52p), et ayant B sorties ;

- B portes optiques ($54_1$, ..., ou $54_B$) ayant leurs entrées couplées respectivement aux sorties du coupleur (53) ;
- et un dispositif de démultiplexage (55) ayant B entrées couplées respectivement aux sorties des B portes optiques ($54_1$, ..., $54_B$) et m/B sorties couplées aux sorties de l'organe de sélection ($222_{1b}$).

10. Commutateur selon la revendication 2, **caractérisé en ce qu'**un organe de sélection ($222_{1c}$) comporte :

- un étage de sélection spatiale comportant N portes optiques ($201_1$, ..., $201_N$) réparties par groupes de N/p ; ces portes étant couplées respectivement aux N entrées de l'organe de sélection ($222_{1c}$) ;
- p coupleurs ($202_1$, ..., $202_p$) ayant chacun N/p entrées et une sortie, ces entrées étant couplées respectivement à N/p sorties d'un groupe de portes optiques ($201_1$, ..., $201_N$) de l'étage de sélection spatiale ;
- un premier réseau de guides d'onde (203), cyclique, ayant q entrées telles que q soit plus grand que p ; p entrées parmi les q entrées de ce réseau étant couplées respectivement aux p sorties des coupleurs ($202_1$, ..., 202p) ;
- un étage de sélection de sous-ensemble de porteuses, comportant B portes optiques ($204_1$, ..., $204_B$) ayant leurs entrées reliées respectivement à B sorties du premier réseau de guides d'onde (203);
- m/B coupleurs ($205_1$, ..., 205p) ayant chacun $B^2/m$ entrées et une sortie, ces $B^2/m$ entrées étant couplées respectivement à des sorties du premier réseau de guides d'onde (203) par l'intermédiaire des portes optiques ($204_i$ );
- un second réseau de guides d'onde (206), cyclique, ayant m/B entrées couplées respectivement aux m/B sorties des coupleurs ($205_1$, ..., $205_{m/B}$), et ayant m/B sorties couplées aux sorties de l'organe de sélection ($222_{1c}$).

11. Commutateur selon la revendication 2, **caractérisé en ce qu'**un organe de sélection ($222_{1d}$) comporte :

- un étage de sélection spatiale comportant N portes optiques ($301_1$, ..., $301_N$) réparties par groupes de N.B/q correspondant chacun à un peigne de longueurs d'onde ;
- q/B coupleurs ($302_1$, ..., $302_{q/B}$) ayant chacun N.B/q entrées et B sorties, les entrées de chaque coupleur étant couplées aux sorties de portes optiques ($301_1$, ..., $301_N$) de l'étage de sélection spatiale;
- un étage de sélection d'un sous-ensemble de porteuses, constitué de q portes optiques ($304_1$,..., 304q) ayant des entrées couplées respectivement aux sorties des coupleurs ($302_1$, ..., 302q/B);
- un démultiplexeur (305), ayant q entrées couplées respectivement aux q sorties des portes ($303_1$, ..., 303q) de l'étage de sélection d'un sous-ensemble de porteuses, et ayant au moins m/B sorties couplées aux sorties de l'organe de sélection ($222_{1d}$); q étant choisi supérieur à m .

12. Commutateur selon la revendication 11, **caractérisé en ce qu'**un organe de sélection comporte un même réseau (310) pour deux étages de commutation ($SS_{2h}$, $SS_{2h+1}$), ce réseau étant utilisé bidirectionnellement.

13. Commutateur selon la revendication 11, **caractérisé en ce qu'**un organe de sélection ($222_{1d}$) comporte en outre q filtres optiques ($303_1$, ..., 303q) couplant respectivement les q sorties des coupleurs ($302_1$, ..., 302q/B) aux entrées des q portes optiques ($304_1$,..., 304q) de l'étage de sélection d'un sous-ensemble de porteuses.

# FIG.1

EP 1 179 964 A2

# FIG.2

EP 1 179 964 A2

FIG 5

FIG 4

FIG 5

FIG 9

FIG 8

FIG 7

FIG 6

FIG 10

222 AC

EP 1 179 964 A2

FIG 11

FIG 12

FIG 13

SS$_{2h}$

$301'_1$  $302'_1$  $303_1$  $304'_1$  310

$306'_1 ... 306'_{\frac{m}{B}}$

SS$_{2h+1}$

$303''_1$  $302''_1$  $301''_1$

$306''_1$

$NB/q$

$306''_{\frac{m}{B}}$

$301'_N$  $302'_{\frac{q}{B}}$  $303'_q$  $304'_q$

$304''_q$  $303''_q$  $302''_{\frac{q}{B}}$  $301''_N$

$NB/q$

EP 1 179 964 A2